# EUROPEAN PATENT APPLICATION

(11) **EP 1 411 383 A1**
(43) Date of publication of application: **21.04.2004**
(21) Application number: 02257122.8
(22) Date of filing: 14.10.2002
(51) Int. Cl.: G02F 1/1335, G02F 1/19, G02B 27/28

(54) **Surface plasmon resonance optical notch filter apparatus and method therefor**

(71) Applicant: Agilent Technologies, Inc. - a Delaware corporation -, Palo Alto, CA 94303-0870 (US)
(72) Inventor: Xu, Yu, c/o Agilent Technologies UK Limited, West Lothian, EH30 9TG (GB)
(74) Representative: Coker, David Graeme

(57) **Abstract**

Known optical notch filter devices employing Surface Plasmon Resonance (SPR) do not completely filter out light of a predetermined wavelength from light from an optical source, because the light of the predetermined wavelength has a combination of polarisation states, namely the p-polarised and s-polarised states. In known device arrangements, if the light of the predetermined wavelength is to be completely filtered out of the light from the optical source, a secondary optical notch filter device has to be provided. The present invention overcomes these disadvantages and achieves complete filtration of light of the predetermined wavelength from the light from the optical source by providing a polarisation modifying element (22) to rotate the state of polarisation of s-polarised light into p-polarised light that can be filtered by a single optical notch filter device (2) employing SPR.

## Description

The present invention relates to an optical notch filter apparatus of the type that absorbs a predetermined wavelength of light by surface plasmon resonance. The present invention also relates to an optical filter apparatus, for example a Fabry-Perot filter, having a Free Spectral Range (FSR) enhanced by the optical notch filter apparatus. The present invention further relates to a method of filtering out light of a predetermined wavelength from an optical source, the light comprising a plurality of wavelengths of light.

In the field of fibre-optics, optical wavelength filters are employed in a number of applications, and the use of optical Surface Plasmon Resonance (SPR) devices as optical wavelength filters is also known.

A typical optical SPR device comprises a layer, or coating, of a metal sandwiched between two different, dielectric materials. A surface plasmon wave can be excited at the resulting metal/dielectric interface when a condition, known as SPR, is achieved. SPR is achieved when light is incident upon the metal/dielectric interface at an angle greater than a total internal reflection angle associated with the metal/dielectric interface. When SPR occurs, the energy of p-polarised light at a particular wavelength, dictated by a number of physical properties of the optical SPR device, matches the SPR condition and is absorbed and converted into energy of a surface plasmon wave. The physical properties of the optical SPR device affecting the absorption of the p-polarised light include the refractive index and/or the thickness of the dielectric material. The absorption of the particular wavelength of the p-polarised light by the optical SPR device makes the optical SPR device suitable for use as a notch filter. Furthermore, by varying one or both of the above-mentioned physical properties, the value of the particular wavelength of p-polarised light can be modified, making the notch filter tunable.

However, the use of SPR devices in the field of transmission of optical energy using optical fibres is limited, because a given optical SPR device typically only absorbs p-polarised light. Since light incident upon the given optical SPR device comprises both p- and s-polarised light, not all light at the particular wavelength is absorbed by a single SPR device.

According to a first aspect of the present invention, there is provided an optical notch filter apparatus for attenuating light of a predetermined wavelength, the apparatus comprising: a dielectric optical element having a layer of metal disposed upon a surface thereof so as to form a metal/dielectric interface; a dielectric medium adjacent the layer of metal, the dielectric medium having a dielectric constant different from a dielectric constant of the dielectric optical element; wherein, when in use, light of a p-polarised state and the predetermined wavelength following a first propagation path so as to be incident upon the metal/dielectric interface is attenuated under conditions that support surface plasmon resonance; characterised by: at least one polarisation modifying optical element arranged relative to the dielectric optical element so as, when in use, to translate the state of polarisation of light of an s-polarised state to the p-polarised state, thereby permitting light at the predetermined wavelength having both the p- and the s-polarised states to be attenuated.

Preferably, the apparatus further comprises a light-directing optical element arrangement to direct, when in use, light of the s-polarised, or light once of the s-polarised state, state along a second propagation path. More preferably, the second propagation path is a return path.

Preferably, the at least one polarisation modifying optical element is disposed in the second propagation path so as to translate, when in use, the state of polarisation of light of the s-polarised state at least partly to the p-polarised state prior to reflection by the metal/dielectric interface.

Preferably, the at least one polarisation modifying optical element is disposed in the first propagation path so as to translate, when in use, the state of polarisation of light of the s-polarised state reflected by the metal/dielectric interface at least partly to the p-polarised state.

Preferably, the at least one polarisation modifying optical element is a phase retarder.

Preferably, the light-directing optical element arrangement comprises a prism.

Preferably, the light-directing optical element arrangement comprises a beam splitter and a reflecting element.

Preferably, the dielectric medium is a first dielectric layer. More preferably, the apparatus comprises a second dielectric layer disposed adjacent the first dielectric layer.

Preferably, the apparatus comprises a control unit arranged to modify at least one property of the first dielectric layer and/or the second dielectric layer. More preferably, the at least one property is thickness and/or refractive index.

Preferably, the first and/or second dielectric layer includes a layer of liquid crystal.

According to a second aspect of the present invention, there is provided a apparatus as claimed in any one of the preceding claims, further comprising: an additional layer of metal disposed upon another surface of the dielectric optical element so as to form an additional metal/dielectric interface, the another surface being substantially opposite the metal/dielectric interface.

Preferably, the apparatus further comprises the dielectric medium adjacent the additional metal/dielectric interface.

Preferably, the apparatus further comprises a third dielectric layer adjacent the additional metal/dielectric interface. More preferably, the apparatus further comprises a fourth dielectric layer disposed adjacent the third dielectric layer.

According to a third aspect of the present invention, there is provided an optical filtering system comprising: an input for providing light from a source of light; an output for collecting light for onward propagation; a first optical notch filter apparatus and a second optical notch filter apparatus as claimed in any one of the preceding claims, the first optical notch filter apparatus being arranged to filter, when in use, light from the input, and the second optical notch filter apparatus being arranged to filter, when in use, light exiting the first optical notch filter apparatus; a light-directing optical element arrangement to direct light from the input to the first optical notch filter apparatus and from the second optical notch filter apparatus to the output.

According to a fourth aspect of the present invention, there is provided a method of filtering out light of a predetermined wavelength, the method comprising: directing light so as to be incident upon a metal/dielectric interface, the light comprising light of a p-polarised state and an s-polarised state, the light of the p-polarised state and the predetermined wavelength being attenuated under conditions that support surface plasmon resonance; characterised by: translating the state of polarisation of the light of the s-polarised state to the p-polarised state, thereby permitting light at the predetermined wavelength having both the p- and the s-polarised states to be attenuated substantially by the surface plasmon resonance.

It is thus possible to provide an optical notch filter apparatus that can absorb light at the predetermined wavelength originating from an optical source and comprising both s-polarised and p-polarised light. Consequently, a single metal/dielectric interface is required to absorb both s- and p-polarised light from the optical source, resulting in a smaller apparatus requiring fewer component parts to manufacture the apparatus. Furthermore, the apparatus can be tuned by varying a physical parameter of the apparatus, thereby varying the predetermined wavelength at which light can be absorbed by the apparatus.

It should be appreciated that the method of filtering out light of the predetermined wavelength provides the same advantages as the optical notch filter apparatus. It is also possible to provide a cascade of multiple optical notch filter devices to filter out a number of wavelengths of light, whilst employing a considerably smaller number of devices made in accordance with the present invention than known optical notch filter devices. A cost saving therefore results through the use of a reduced number of devices. Additionally, it is also possible to provide a tunable Fabry-Perot filter having an enhanced FSR.

At least one embodiment of the invention will now be described, by way of example only, with reference to the accompanying drawings, in which:
**Figure 1** is a schematic diagram of an optical notch filter device constituting an embodiment of the invention;
**Figure 2** is a schematic diagram of a layer of the device of Figure 1 relating to a second embodiment of the invention;
**Figure 3** is a schematic diagram of the optical notch filter device constituting a third embodiment of the invention;
**Figure 4** is a schematic diagram of the optical notch filter device constituting a fourth embodiment of the invention;
**Figure 5** is a schematic diagram of the optical notch filter device constituting a fifth embodiment of the invention;
**Figure 6** is a schematic diagram of a filter system constituting a sixth embodiment of the invention; and
**Figure 7** is a schematic diagram of a Fabry-Perot filter including the optical notch filter device of one of the embodiments of the invention.

Throughout the following description, identical reference numerals will be used to identify like parts.

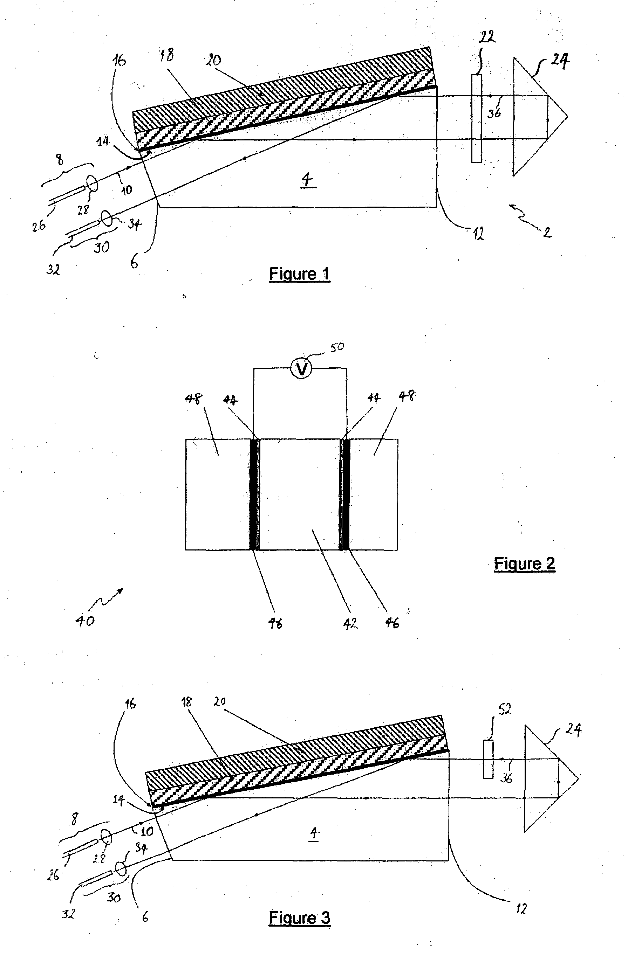

Referring to Figure 1, an optical notch filter device 2 comprises a bulk optical element 4, for example a light-transmissive bulk optical element formed from a first dielectric material, for example any optical transmissive material, such as glass or a suitable optical-grade polymer. The bulk optical element 4 comprises a first input/output (I/O) surface 6 through which light from an optical source 8 propagates along a first propagation path 10. The bulk optical element 4 also comprises a second I/O surface 12 through which the light propagates.

A first surface 14 adjacent the first and second I/O surfaces 6, 12 is coated with a metallic film or layer 16, for example a noble metal, such as gold or silver, so as to form a metal/dielectric interface with the bulk optical element 4. As an alternative, any known material having a dielectric constant similar to that of a metal known to assist in supporting SPR can be used.

An angle subtended between the first metal/dielectric interface and the first I/O surface 6 is such that light from the optical source 8 entering and exiting the bulk optical element 4 at the first I/O surface 6 does so perpendicular to the first I/O surface 6. Similarly, an angle subtended between the first metal/dielectric interface and the second I/O surface 12 is such that light entering and exiting the bulk optical element 4 at the second I/O surface 12 does so perpendicular to the second I/O surface 12.

A first dielectric layer 18 formed from a second dielectric material is disposed adjacent the metallic layer 16, a second dielectric layer 20 formed from a third dielectric material being disposed adjacent the first dielectric layer 18.

A polarisation modifying optical element, for example a phase retarder, such as a λ/4 Wave Plate 22 is disposed opposite the second I/O surface 12, a light-directing optical element arrangement 24, for example, a prism, such as a triangular prism, being disposed opposite the λ/4 Wave Plate 22.

The optical source 8 is arranged opposite the first I/O surface 6, and comprises, in this example, a first optical fibre 26 and a first lens system 28 for collimating light exiting the optical fibre 26.

A light collection arrangement 30 comprises, in this example, a second optical fibre 32 and a second lens system 34 for launching light into the second optical fibre 32. The light collection arrangement 30 is appropriately positioned relative to the first I/O surface 6 so as to intercept and collect light exiting the first I/O surface 6 for onward propagation.

In operation, light from the optical 8 source comprises light of a p-polarised state and light of an s-polarised state. The light is launched from the optical source 8 into the bulk optical element 4 along the first propagation path 10. The metal/dielectric interface of the optical notch filter device 2 supports SPR and so p-polarised light of a predetermined wavelength, dictated by at least one physical property of the first and/or second dielectric layers 18,20, is absorbed. The remaining p-polarised light and substantially all of the s-polarised light is reflected at the metal/dielectric interface and leaves the bulk optical element 4 through and substantially perpendicular to the second I/O surface 12. The reflected light is then incident upon the λ/4 Wave Plate 22 and propagates therethrough, the polarisation of the light being rotated by λ/4, thereby rotating the state of polarisation of the s-polarised light, and in particular that of the s-polarised light of the predetermined wavelength, towards the p-polarised state. In this example, the λ/4 Wave Plate 22 serves to translate the s-polarised light at least partly to the p-polarised state. After propagating through the λ/4 Wave Plate 22, the light is incident upon the prism 24 and reflected back towards the bulk optical element 4 along a second propagation path 36 via the λ/4 Wave Plate 22. The propagation of the retroreflected light through the λ/4 Wave Plate 22 for a second time serves to further rotate the state of polarisation of the light so that the s-polarised light from the optical source 8 is now in the p-polarised state. The retroreflected light then enters the bulk optical element 4 via the I/O surface 12 and is incident upon the metal/dielectric interface again. By virtue of SPR, the p-polarised light (formerly s-polarised light) at the predetermined wavelength is absorbed, substantially all light at the predetermined wavelength now being filtered out of the light from the optical source 8. The filtered light leaves the bulk optical element 4 via the first I/O surface 6 and is collected by the second lens system 34 and focussed into the second optical fibre 32 for onward propagation.

Referring to Figure 2, the first and/or second dielectric layer 18,20 can be a liquid crystal panel 40 comprising a liquid crystal layer 42 sandwiched between a pair of alignment layers 44. A respective transparent electrode 46 is respectively disposed adjacent each of the pair of alignment layers 44 and a glass substrate 48 is disposed adjacent each transparent electrode 46.

A source of a voltage signal 50 comprises a voltage generation circuit (not shown) to apply a suitable voltage signal, V, across the liquid crystal layer 42. The circuit is coupled to a control circuit, or controller (not shown), the control circuit optionally being integral with the voltage generation circuit.

In operation, the suitable voltage signal, V, generated by the source of the voltage signal under the control of the control circuit is set and varied in amplitude as required. Variation of the voltage signal applied across the liquid crystal layer 42 results in a varying degree of rotation of liquid crystals in the liquid crystal layer 42. As a result of varying the degree of rotation of the liquid crystals, the refractive index of the liquid crystal layer 42 varies. Consequently, a relationship exists between the refractive index of the liquid crystal layer 42 and the voltage signal, V.

In order to select the value of the predetermined wavelength, the refractive index of the first or second dielectric layer 18, 20 is set by setting the voltage signal, V, appropriately.

It should be appreciated that other properties of the first and/or second dielectric layers 18,20 can be varied in order to set the value of the predetermined wavelength. For example, the thickness of the first and/or second dielectric layer can be selectively set by use of a piezoelectric dielectric material and application of the reverse piezoelectric effect. Additionally or alternatively, the refractive index of the first and/or second dielectric layer can also be selectively set.

Referring to Figure 3, the embodiments of Figure 1 and 2 are modified by replacing the λ/4 Wave Plate 22 with a λ/2 Wave Plate 52. The λ/2 Wave Plate 52 is appropriately positioned between the prism 24 and the bulk optical element 4 so that, when in use, the light following the first propagation path 10, after exiting the bulk optical element 4 via the second I/O surface 12, is only rotated once prior to re-entering the bulk optical element via the second I/O surface 12. In this example, the λ/2 Wave Plate 52 is positioned so that the light is rotated once the light has been retroreflected along the return path by the prism 24. However, it should be understood that the λ/2 Wave Plate 52 can be located so as to intercept the light after the light has exited the bulk optical element 4, but before entering the prism 24.

The alternatives set forth in this example result in the s-polarised light of the predetermined wavelength being rotated, or translated, into p-polarised light by a single passage through the λ/2 Wave Plate 52.

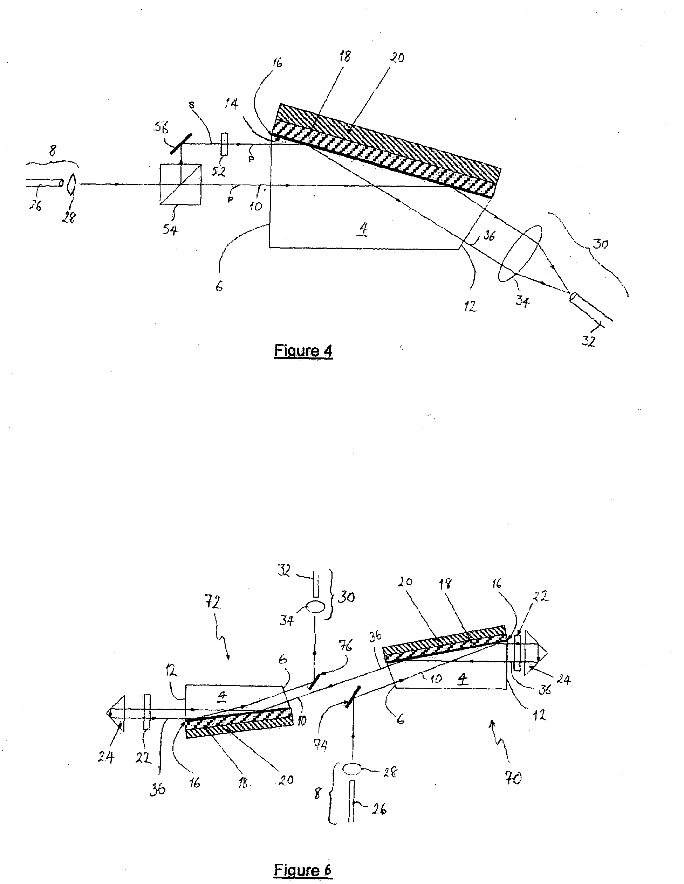

In another embodiment of the invention (Figure 4), the Wave Plate 22,52 and the prism 24 opposite the second I/O surface 12 of the previous examples are replaced with the following arrangement of optical components.

The angle subtended between the metal/dielectric interface and the second I/O surface 12 is changed so that light exiting the bulk optical element 4 does so perpendicular to the plane of the second I/O surface 12. In this example, the light collection arrangement 30 is disposed opposite the second surface 12.

The angle subtended between the metal-dielectric interface and the first I/O surface 6 is also changed so that light entering the bulk optical element 4 does so perpendicular to the plane of the first I/O surface 6. In this respect, the position of the optical source 8 relative to the bulk optical element 4 is arranged so that the light enters the bulk optical element 4 perpendicular to the incidence surface 6.

The light-directing optical arrangement is disposed between the first I/O surface 6 and the optical source 8. In this example, the light-directing optical arrangement comprises a polarisation beam-splitter 54 and a reflecting surface, for example, a mirror 56. The mirror 56 is positioned relative to the beam-splitter 54 and the first I/O surface 6 so as to direct, when in use, light reflected by the beam splitter 54 towards the first I/O surface 6 substantially parallel to light transmitted by the beam splitter 54. The λ/2 Wave Plate 52 is disposed between the mirror 56 and the first I/O surface 6.

In operation, the light emitted from the optical source 8 is intercepted by the polarisation beam splitter 54 and separated into a transmitted beam of p-polarised light and a reflected beam of s-polarised light. The p-polarised light follows the first propagation path 10, the s-polarised light being reflected by the mirror 56 towards, and substantially parallel to, the p-polarised light so as to follow the second propagation path 36. Before being incident upon the first I/O surface 6, the s-polarised light is intercepted by the λ/2 Wave Plate 52 and rotated into p-polarised light. Consequently, two beams of p-polarised light propagate through the bulk optical element 4 and are reflected at the metal/dielectric interface. In common with the previous examples, the p-polarised light of the predetermined wavelength is absorbed through SPR, the light exiting the bulk optical element 4 being substantially free of light of the predetermined wavelength.

Upon exiting the bulk optical element 4 via the second I/O surface 12, the filtered light is collected by the second lens system 34 and focussed into the second optical fibre 32.

In a fifth embodiment (Figure 5), the device of Figure 4 is modified so that a second surface 60 opposite the first surface 14 is formed so as to be, in this example, substantially parallel to the first surface 14. The second surface 60 is coated with an additional metallic film or layer 62 so as to form an additional metal/dielectric interface. A third dielectric layer 64 is disposed adjacent the metal layer 62 and a fourth dielectric layer 66 is disposed adjacent the third dielectric layer 64.

The dielectric materials used to form the third and fourth dielectric layers 64,66 are, in this example, identical or similar to the dielectric materials used to form the first and second dielectric layers 18,20 respectively. However, different dielectric materials can, of course, be used to form the third and fourth layers 64,66. Additionally, and in common with previous embodiments already described, the third and/or fourth dielectric layers 64,66 can be formed so that one or more physical property of the third and/or fourth dielectric layers 64,66 can be varied.

Additionally, the angles subtended between the first and second I/O surfaces 6,12 and the metal/dielectric interface are respectively altered to ensure that the light entering and exiting the bulk optical element 4 does so perpendicular to the first and second I/O surfaces 6,12 respectively. Also, the position of the light collection arrangement 30 relative to the second I/O surface 12 is changed so that the light exiting the bulk optical element 4 perpendicular to the second I/O surface 12 is correctly incident upon the second lens system 34.

The result of the above described constructional addition and change, is that the device 2 now comprises a double-notch, i.e. two predetermined wavelengths of light can be filtered out of the light emitted by the optical source 8.

In operation, the light emitted by the optical source 8 is pre-processed in a same manner to that described above in relation to figure 4 so that only p-polarised light is incident upon the first I/O surface 6. However, the light following the first and second propagation paths 10,36 is reflected by both the metal/dielectric interface and the additional metal/dielectric interface. Consequently, through SPR, p-polarised light of the predetermined wavelength is filtered out of the light following the first and second propagation paths after reflection at the metal/dielectric interface. Once reflected by the metal/dielectric interface, the light following the first and second propagation paths is then incident upon the additional metal/dielectric interface whereupon, again through SPR, p-polarised light of another wavelength (determined by the physical properties of the third and/or fourth dielectric layers 64,66) is absorbed, other wavelengths of light being reflected by the additional metal/dielectric interface prior to exiting the bulk optical element 4 along the respective first and second optical paths 10,36. Upon exiting the bulk optical element 4, the light is collected by the second lens system 34 and focussed into the second optical fibre 32 for onward propagation.

Referring to Figure 6, filtering the predetermined wavelength and the another predetermined wavelength from the light emitted from the optical source 8 is achieved using two optical notch filter devices 2 as described in relation to Figure 1 or Figure 2.

By correct orientation and positioning of a first optical notch filter device 70, a second optical notch filter device 72, a second mirror 74 and a third mirror 76, the optical source 8 and the light collection arrangement 30, an optical path is achieved that causes the light emitted from the optical source 8 to be filtered firstly by the first optical notch filter device 70, followed by the second optical notch filter device 72 prior to collection by the light collection arrangement 30.

In this example, in order to filter out two distinct wavelengths of light, one or more physical property of the first and/or second dielectric layers 18,20 of the first and second optical notch filter devices 70,72 are differed.

The second mirror 74 is positioned to reflect light from the optical source 8 to the first I/O surface 6 of the first device 70, the first optical source providing a notional input. The second device 72 is positioned relative to the first device 70 so that the first I/O surface 6 of the second device 72 is opposite, and substantially parallel to, the first I/O surface 6 of the first device 70.

The third mirror 76 is positioned relative to the first I/O surface 6 of the second device 72 for directing light filtered by, and exiting, the second device 72 to the second lens system 34 of the light collection arrangement 30, the light collection arrangement 30 providing a notional output.

In operation, light comprising p-polarised light and s-polarised light is emitted from the optical source 8 and reflected to the first device 70 so that the light is incident upon the first I/O surface 6 perpendicular to the first I/O surface 6. The light is processed and filtered in a same manner as described in relation to Figure 1 or Figure 2 (depending upon the constitution of the first and second dielectric layers 18,20), the filtered light substantially free of the predetermined wavelength of light exiting the first device 70 perpendicular to the first I/O surface 6 of the first device 70 along the return path 36. Once the filtered light free of the predetermined wavelength has exited the first device 70, the light is incident upon the first I/O surface 6 of the second device 72, the filtered light effectively now following the first propagation path 10 and being incident perpendicular to the first I/O surface 6 of the second device 72. Another predetermined wavelength of light is then filtered out of the filtered light free of the light of the predetermined wavelength in a same manner to that already described above in relation to Figure 1 or Figure 2.

Upon exiting the second device 72 (perpendicular to the first I/O surface 6 of the second device 72), the light substantially free of light of the predetermined wavelength and the another predetermined wavelength is reflected by the third mirror 76 to the second lens system 34 of the light collection arrangement 30 and is focussed into the second optical fibre 32 for onward propagation.

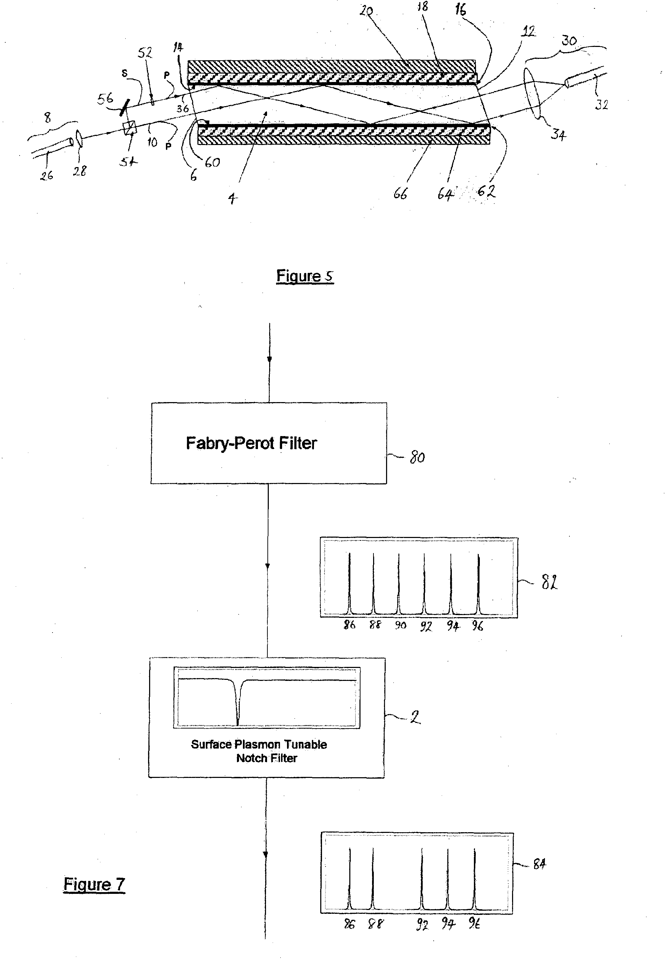

In a seventh embodiment of the invention (Figure 7), a Fabry-Perot filter 80 is coupled to the optical notch filter device 2 of Figure 1 or Figure 2 by coupling an output fibre pigtail of the Fabry-Perot filter 80 in place of the first optical fibre 26.

In operation, a source of light is filtered by the Fabry-Perot filter 80, resulting in light output having an output spectra 82. The light output is then filtered by the optical notch filter device 2 in a same manner as that already described above in relation to Figure 1 or Figure 2. Light of the predetermined wavelength is therefore filtered out of the output light resulting in the output light having a filtered spectra 84.

Prior to filtration, the output spectra 82 comprised a first, a second, a third, a fourth, a fifth and a sixth peak 86,88,90,92,94,96. However, once substantially free of the light of the predetermined wavelength, the third peak is substantially not present in the filtered spectra 84, effectively resulting in an increased distance between now adjacent second and fourth peaks 88,92, i.e. an enhanced FSR, whilst maintaining Full Width at Half Maximum (FWHM).

It should be appreciated that references herein to "light" refer to electromagnetic radiation of wavelengths between about 300 nm and about 10 µm, preferably between about 400 nm and about 2 µm, very preferably between about 800nm and 1700nm.

It should be further appreciated that whilst the above examples relate to devices comprising up to four dielectric layers, a greater number of dielectric layers can be used.

## Claims

1. An optical notch filter apparatus (2) for attenuating light of a predetermined wavelength, the apparatus (2) comprising:
a dielectric optical element (4) having a layer of metal (16) disposed upon a surface (14) thereof so as to form a metal/dielectric interface;
a dielectric medium (18) adjacent the layer of metal (16), the dielectric medium (18) having a dielectric constant different from a dielectric constant of the dielectric optical element (4);
wherein, when in use, light of a p-polarised state and the predetermined wavelength following a first propagation path (10) so as to be incident upon the metal/dielectric interface is attenuated under conditions that support surface plasmon resonance; **characterised by**:
at least one polarisation modifying optical element (22,52) arranged relative to the dielectric optical element (4) so as, when in use, to translate the state of polarisation of light of an s-polarised state to the p-polarised state, thereby permitting light at the predetermined wavelength having both the p- and the s-polarised states to be attenuated.

2. An apparatus as claimed in Claim 1, further comprising a light-directing optical element arrangement (24,54,56) to direct, when in use, light of the s-polarised state, or light once of the s-polarised state, along a second propagation path (36).

3. An apparatus as claimed in Claim 2, wherein the second propagation path (36) is a return path.

4. An apparatus as claimed in Claim 2 or Claim 3, wherein the at least one polarisation modifying optical element (22,52) is disposed in the second propagation path (36) so as to translate, when in use, the state of polarisation of light of the s-polarised state at least partly to the p-polarised state prior to reflection by the metal/dielectric interface.

5. An apparatus as claimed in Claim 2 or Claim 3, wherein the at least one polarisation modifying optical element (22,52) is disposed in the first propagation path (10) so as to translate, when in use, the state of polarisation of light of the s-polarised state reflected by the metal/dielectric interface at least partly to the p-polarised state.

6. An apparatus as claimed in any one of the preceding claims, wherein the at least one polarisation modifying optical element (22,52) is a phase retarder.

7. An apparatus as claimed in any one of the preceding claims, wherein the light-directing optical element arrangement (24,54,56) comprises a prism (24).

8. An apparatus as claimed in any one of Claims 1 to 6, wherein the light-directing optical element arrangement (24,54,56) comprises a beam splitter (54) and a reflecting element (56).

9. An apparatus as claimed in any one of the preceding claims, wherein the dielectric medium is a first dielectric layer (18).

10. An apparatus as claimed in Claim 9, further comprising a second dielectric layer (20) disposed adjacent the first dielectric layer (18).

11. An apparatus as claimed in Claim 9 or Claim 10, further comprising a control unit (50) arranged to modify at least one property of the first dielectric layer (18) and/or the second dielectric layer (20).

12. An apparatus as claimed in Claim 11, wherein the at least one property is thickness and/or refractive index.

13. An apparatus as claimed in Claim 1 or Claim 10, wherein the first and/or second dielectric layer (18,20) includes a layer of liquid crystal (42).

14. An apparatus as claimed in any one of the preceding claims, further comprising:
an additional layer of metal (62) disposed upon another surface (60) of the dielectric optical element (4) so as to form an additional metal/dielectric interface, the another surface (60) being substantially opposite the metal/dielectric interface.

15. An apparatus as claimed in Claim 14, further comprising:
the dielectric medium adjacent the additional metal/dielectric interface.

16. An apparatus as claimed in Claim 14 or Claim 15, further comprising a third dielectric layer (64) adjacent the additional metal/dielectric interface.

17. An apparatus as claimed in Claim 16, further comprising a fourth dielectric layer (66) disposed adjacent the third dielectric layer (64).

18. An optical filtering system comprising:
an input for providing light from a source of light (8);
an output for collecting light for onward propagation;
a first optical notch filter apparatus (70) and a second optical notch filter apparatus (72) as claimed in any one of the preceding claims, the first optical notch filter apparatus (70) being arranged to filter, when in use, light from the input, and the second optical notch filter apparatus (72) being arranged to filter, when in use, light exiting the first optical notch filter apparatus (70);
a light-directing optical element arrangement (74,76) to direct light from the input to the first optical notch filter apparatus (70) and from the second optical notch filter apparatus (72) to the output.

19. A method of filtering out light of a predetermined wavelength, the method comprising:
directing light so as to be incident upon a metal/dielectric interface, the light comprising light of a p-polarised state and an s-polarised state, the light of the p-polarised state and the predetermined wavelength being attenuated under conditions that support surface plasmon resonance; **characterised by**:
translating the state of polarisation of the light of the s-polarised state to the p-polarised state, thereby permitting light at the predetermined wavelength having both the p- and the s-polarised states to be attenuated substantially by the surface plasmon resonance.
